Europäisches Patentamt

**European Patent Office**

Office européen des brevets

(19)

(11) Veröffentlichungsnummer: **0 033 923**
**B1**

(12)  # EUROPÄISCHE PATENTSCHRIFT

(45) Veröffentlichungstag der Patentschrift:
**09.02.83**

(51) Int. Cl.³: **A 01 B 63/112**

(21) Anmeldenummer: **81100709.5**

(22) Anmeldetag: **31.01.81**

(54) **Elektrohydraulische Steuereinrichtung zum Betätigen eines Hubwerks von landwirtschaftlichen Arbeitsfahrzeugen.**

(30) Priorität: **08.02.80 DE 3004592**

(43) Veröffentlichungstag der Anmeldung:
**19.08.81 Patentblatt 81/33**

(45) Bekanntmachung des Hinweises auf die Patenterteilung:
**09.02.83 Patentblatt 83/6**

(84) Benannte Vertragsstaaten:
**AT DE FR GB IT SE**

(56) Entgegenhaltungen:
**DE-B-1 220 634**
**DE-B-1 961 280**
**GB-A-1 068 336**
**US-A-3 516 498**
**US-A-3 814 188**

(73) Patentinhaber: **ROBERT BOSCH GMBH, Postfach 50,
D-7000 Stuttgart 1 (DE)**

(72) Erfinder: **Romes, Roman, Lindenstrasse 29,
D-7251 Friolzheim (DE)**

## Elektrohydraulische Steuereinrichtung zum Betätigen eines Hubwerks von landwirtschaftlichen Arbeitsfahrzeugen

### Stand der Technik

Die Erfindung geht aus von einer elektrohydraulischen Steuereinrichtung zum Betätigen eines Hubwerks von landwirtschaftlichen Arbeitsfahrzeugen nach der Gattung des Hauptanspruchs. Es ist schon eine solche Steuereinrichtung aus US-A-3 814 188 bekannt, bei der jeder Unterlenker eines elektrohydraulisch betätigbaren Dreipunktgestänges über einen Biegestab gehäusefest gelagert ist. Jeder Biegestab hat einen zylindrischen Abschnitt zwischen seinem fest eingespannten Ende und seinem den Unterlenker tragenden Ende, in dem an seiner Oberfläche Dehnmeßstreifen angeordnet sind, welche abhängig von den von den Unterlenkern übertragenen Kräfte elektrische Signale an eine Verstärkereinrichtung senden. Beide Biegestäbe sind mit ihren Dehnmeßstreifen tragenden Bereichen im Inneren eines gehäusefest angeordneten Schutzrohres angeordnet. Nachteilig bei dieser Steuereinrichtung ist, daß diese Ausbildung und Anordnung der Geber einen hohen Bauaufwand erfordert. So sind hier teure Biegestäbe aus hochwertigem Material notwendig, die zudem viel Bauraum beanspruchen. Außerdem ist die Montage der Geber schwierig. Bei einem defekten Geber müssen hier die Unterlenker sowie das Schutzrohr mit den Biegestäben ausgebaut werden. Ein Einbau von Ersatzteilen gestaltet sich dadurch aufwendig hinsichtlich Zeit- und Materialeinsatz. Ferner ist die Durchführung der elektrischen Kabel von den Dehnmeßstreifen zur elektronischen Schalteinrichtung durch Bohrungen im Schutzrohr relativ störanfällig und umständlich.

Ferner ist aus GB-A-1 068 336 eine elektrohydraulische Steuereinrichtung zum Betätigen des Dreipunktgestänges in einem Traktor bekannt, bei der die Kräfte im Unterlenker über Dehnmeßstreifen erfaßt werden. Zu diesem Zweck weist jeder Unterlenker eine kreisförmige Aussparung auf, an deren Wand ringförmig vier Dehnmeßstreifen in Brückenschaltung angeordnet sind. Nachteilig bei dieser Lösung ist, daß sie ebenfalls mit relativ empfindlichen Dehnmeßstreifen arbeitet. Das Aufkleben, Anschließen und Abdecken der Dehnmeßstreifen ist eine zeitaufwendige, überwiegend manuelle Tätigkeit. Zudem sind sie in beweglichen Teilen angeordnet. Dadurch gestaltet sich die Ableitung der Meßsignale relativ schwierig. Ferner müssen die Unterlenker hierzu speziell ausgerüstet werden. Bei einem defekten Meßwertgeber kann es notwendig werden, einen gesamten Unterlenker auszutauschen. Diese Bauart ist ferner wenig montagefreundlich und eignet sich schlecht für den rauhen Betrieb bei landwirtschaftlichen Fahrzeugen.

Ferner ist aus US-A-3 516 498 eine elektrohydraulische Steuereinrichtung für den Kraftheber eines Traktors bekannt, die auf einen Unterlenker einwirkt. Der Unterlenker ist hier über einen Schwinghebel am Gehäuse des Traktors gelagert und zusätzlich an einem Kniehebelgestänge angelenkt. Zum Messen der im Unterlenker auftretenden Kräfte steht das von einer Spiralfeder abgestützte Kniehebelgestänge mit einem induktiv arbeitenden Wegaufnehmer in Verbindung. Nachteilig bei dieser Lösung ist vor allem der hohe Bauaufwand für die Ermittlung der Kräfte im Unterlenker.

Bekannt ist es auch, zur Messung von Drehmomenten an einer Welle magnetoelastische Transformatorgeber zu verwenden (CH. Rohrbach, Handbuch für elektr. Messen mechanischer Größen, 1967). Bei diesem Geber wird ein ortsfest angeordneter, weichmagnetischer Kern mit Primärspulen und Sekundärspulen an die Welle herangeführt. Infolge der bei der Übertragung des Moments auftretenden Zug- und Druckspannungen in der Welle ändert sich deren Permeabilität. Aus den damit verbundenen Kopplungsänderungen zwischen den Spulen läßt sich eine Meßspannung ableiten, die proportional zu dem von der Welle übertragenen Moment ist. Dieser Geber dient nur zur Drehmomentmessung und dient nicht zur Steuerung einer elektrohydraulischen Steuereinrichtung bei Traktoren.

### Vorteile der Erfindung

Die erfindungsgemäße Steuereinrichtung mit den kennzeichnenden Merkmalen des Hauptanspruchs hat demgegenüber den Vorteil, daß sie besonders einfach und robust baut. Da der ohnedies vorhandene Bolzen zur Lagerung des Unterlenkers als Teil des Gebers verwendet wird, ist der notwendige Aufwand relativ gering. Der Geber arbeitet verschleißfrei und ermöglicht einen robusten Betrieb der elektrohydraulischen Steuereinrichtung. Die Bauweise des Gebers führt zu einer montagefreundlichen Steuereinrichtung, zumal die elektrischen Anschlüsse des Gebers aus einem unbewegten Teil herausgeführt werden. Ferner läßt sich dieser Geber leicht nachträglich bei bereits vorhandenen Steuereinrichtungen einbauen.

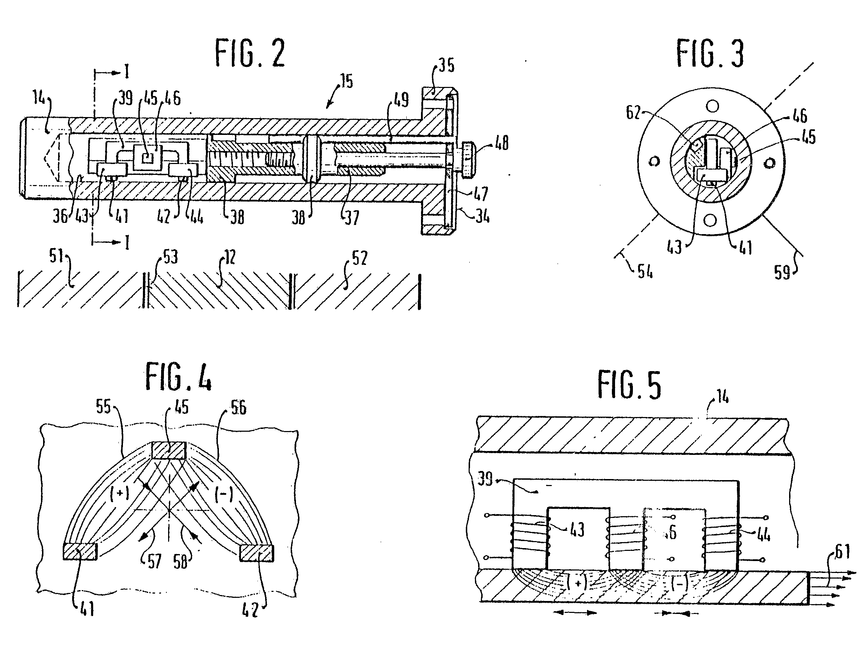

Durch die in den Unteransprüchen aufgeführten Maßnahmen sind vorteilhafte Weiterbildungen und Verbesserungen der im Hauptanspruch angegebenen Steuereinrichtung möglich. Besonders vorteilhaft ist eine Ausbildung gemäß Anspruch 2, wodurch eine besonders wirkungsvoll arbeitende Steuereinrichtung möglich ist. Gemäß einer Ausbildung nach Fig. 3 wird ein Geber hoher Linearität erreicht, der zudem unempfindlich gegen Temperaturänderungen ist. Eine robuste, einfach und kompakt bauende Einrichtung bei gutem Nutzsignal des Gebers ergibt sich gemäß den Ansprüchen 4 bis 10. Besonders vorteilhaft ist eine Ausbildung des Gebers gemäß den Ansprüchen 11 bis 15, wodurch vor allem ein höheres Nutzsignal erreichbar ist.

## Zeichnung

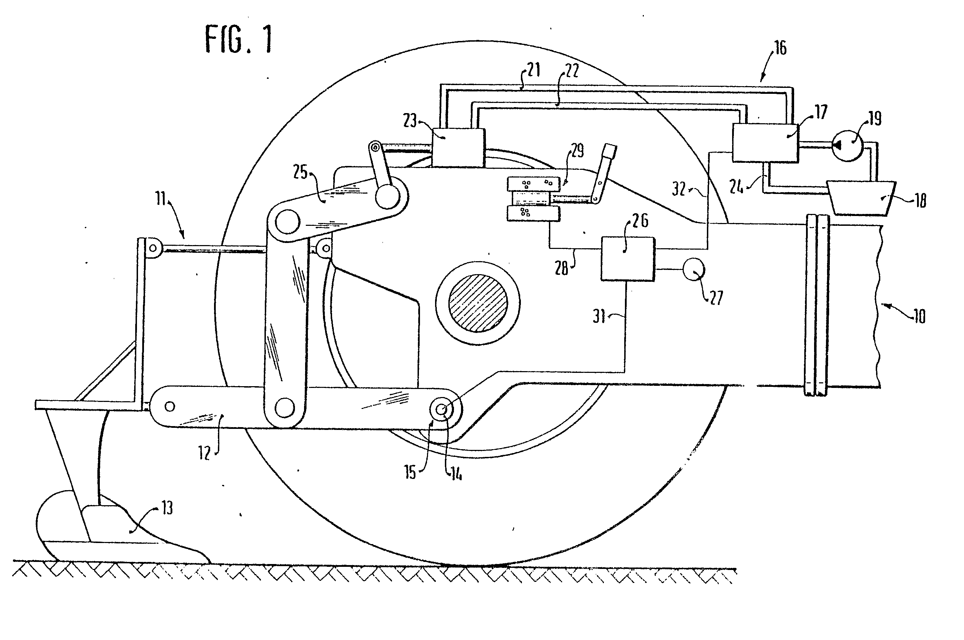

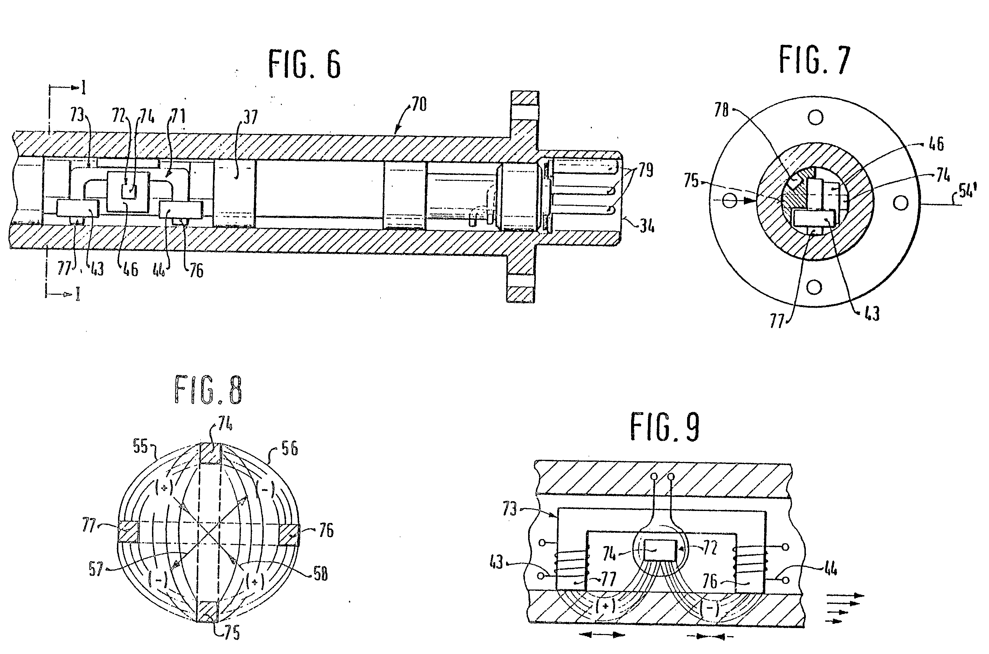

Ein Ausführungsbeispiel der Erfindung ist in der Zeichnung dargestellt und in der nachfolgenden Beschreibung näher erläutert. Es zeigen Fig. 1 eine elektrohydraulische Steuereinrichtung für eine Zugkraftregelung an einem Traktor in vereinfachter Darstellung, Fig. 2 einen Längsschnitt durch einen magnetoelastischen Transformatorgeber, wie er in Fig. 1 verwendet wird, Fig. 3 einen Querschnitt gemäß I-I nach Fig. 2 sowie die Fig. 4 und 5 den Spannungsverlauf und den Feldlinienverlauf beim Transformatorgeber nach Fig. 2. Die Fig. 6 bis 9 zeigen eine zweite Ausführungsform des Transformatorgebers in entsprechender Weise wie in Fig. 2 bis 5.

## Beschreibung des Ausführungsbeispiels

Die Fig. 1 zeigt einen Traktor 10, an dem über ein übliches Dreipunktgestänge 11 mit einem Unterlenker 12 ein Pflug 13 angelenkt ist. Der Unterlenker 12 ist über einen Bolzen 14 am Gehäuse des Traktors 10 schwenkbar gelagert, wobei der Bolzen zugleich ein Teil eines magnetoelastischen Transformatorgebers 15 bildet. Zum Heben und Senken des Unterlenkers 12 ist auf dem Traktor 10 eine hydraulische Einrichtung 16 vorgesehen. Zu dieser Einrichtung 16 gehört ein elektromagnetisch betätigbares Wegeventil 17, das aus einem Tank 18 über eine Pumpe 19 mit Druckmittel versorgbar ist. Das Wegeventil 17 steuert über Leitungen 21, 22 einen hydraulischen Kraftheber 23 und steht über eine Rücklaufleitung 24 mit dem Tank 18 in Verbindung. Zum Betätigen des Unterlenkers 12 ist der Kraftheber 23 über ein Hubgestänge 25 am Unterlenker 12 angelenkt. Ferner ist am Traktor 10 eine elektronische Steuereinrichtung 26 angeordnet, die mit einer Stromquelle 27 in Verbindung steht. Ferner ist die Steuereinrichtung 26 zur Sollwerteingabe über eine erste elektrische Leitung 28 mit einem Sollwertgeber 29 verbunden. Zur Istwerteingabe führt von der Steuereinrichtung 26 eine zweite elektrische Leitung 31 zum Transformatorgeber 15. Eine dritte elektrische Leitung 32 verbindet die Steuereinrichtung 26 mit dem Magneten des Wegeventils 17.

Der Transformatorgeber 15 nach Fig. 1 ist in Fig. 2 und 3 näher dargestellt, auf die im folgenden nun eingegangen wird. Der Bolzen 14 hat an einer Stirnseite 34 einen Bund 35. Von der Stirnseite 34 aus ist im Bolzen 14 eine Sacklochbohrung 36 angeordnet, die bis nahe zur anderen Stirnseite des Bolzens reicht. In die Sacklochbohrung 36 ist ein Spulenträger 37 eingesetzt und über zwei Kolbenabschnitte 38 in ihr geführt. An dem am weitesten in die Sacklochbohrung 36 hineinragenden Ende des Spulenträger 37 ist ein E-förmiger Magnetkern 39 befestigt. Die beiden äußeren, in derselben Ebene liegenden Schenkel 41, 42 des Magnetkerns 39 tragen die beiden Sekundärspulen 43 und 44. Der mittlere Schenkel 45 des E-förmigen Magnetkerns 39 ist in eine zu den äußeren Schenkeln um 90° versetzte Ebene umgebogen und trägt eine Primärspule 46. Der Magnetkern 39 ist so angeordnet, daß die Enden der Schenkel 41, 42, 45 möglichst nahe an der Innenwand der Sacklochbohrung 36 liegen. Die Sacklochbohrung 36 wird an der Stirnseite 34 durch eine Deckscheibe 47 verschlossen. In der Deckscheibe 47 ist eine Einstellschraube 48 gelagert, die mit ihrem freien Ende in den Spulenträger 37 hineinragt und mit deren Hilfe der Spulenträger 37 in seiner axialen Lage verstellbar ist. Damit der Spulenträger 37 im Bolzen 14 seine vorgesehene Winkellage einhält, ist in der Deckscheibe eine Führungsstange 49 befestigt, die durch eine Ausnehmung im Bund 38 des Spulenträgers 37 hindurchführt. Die elektrischen Anschlüsse für die Primärspule 46 und die Sekundärspulen 43, 44 sind in nicht näher gezeichneter Weise durch den Spulenträger 38 hindurch nach außen geführt. Mit dem Bolzen 14 wird der Unterlenker 12 zwischen zwei am Gehäuse des Traktors 11 befestigten Augen 51, 52 gelagert. Dabei kommt der Magnetkern 39 im Bereich der Trennebene 53 zwischen Auge 51 und Unterlenker 12 zu liegen, wo die Schubspannungen im Bolzen 14 am größten sind. Wie Fig. 3 näher zeigt, greift die vom Unterlenker 12 ausgeübte Kraft in Richtung der Linie 54 am Bolzen 14 an. Dadurch wird erreicht, daß die magnetischen Flußlinien über den Bolzen 14 in einem Bereich hoher Schubspannung verlaufen. Der Bolzen 14 selbst besteht aus weichmagnetischem Material, damit der erwähnte Feldlinienfluß stattfinden kann.

Die Wirkungsweise der elektrohydraulischen Steuereinrichtung am Traktor 10 zur Zugkraftregelung des angehängten Pfluges 13 wird wie folgt erläutert. Da das Prinzip der Zugkraftregelung an sich bekannt ist, soll hier nur kurz darauf eingegangen werden. Mit dem Istwertgeber 29 wird beim Pflügen eine Zugkraft bestimmter Größe gewählt. Die vom Pflug 13 auf den Unterlenker 12 ausgeübte Kraft wird vom Transformatorgeber 15 in eine dazu proportionale elektrische Größe umgewandelt, die der elektronischen Steuereinrichtung 26 eingegeben wird. Das Steuergerät 26 vergleicht den über die erste Leitung 28 ankommenden Sollwert mit dem über die zweite Leitung 31 ankommenden Istwert. Sind beide Werte gleich, so fließt kein Signal über die dritte elektrische Leitung 32 zu den Magneten des Wegenventils 17. Damit wird die Pumpe 19 über das Wegeventil 17 zum Tank 18 entlastet, während der Kraftheber 23 hydraulisch blockiert ist. Der Kraftheber 23 hält über das Hubgestänge 25 den Unterlenker 12 und damit den Pflug 13 in der jeweiligen Lage. Ändert sich nun die Kraft auf den Pflug 13 und damit im Unterlenker 12, so weicht das vom Transformatorgeber 15 zurückgemeldete Istwertsignal vom Sollwertsignal ab. Die elektronische Steuereinrichtung 26 bildet ein Differenzsignal und steuert damit das Wegeventil 17 derart, daß von der Pumpe 19 zum Kraftheber 23 fließendes Druckmittel über das Hubgestänge 25 den Unterlenker 12 so lange und in einer solchen Richtung bewegt, bis das vom Transformatorgeber 15 zurückgemeldete Istwertsignal und das vom Sollwertgeber 29 gemeldete Signal gleich groß sind.

Bei dieser Zugkraftregelung arbeitet der zur Übertragung der Zugkräfte vom Unterlenker auf das Gehäuse des Traktors 10 ohnedies notwendige Bolzen 14 zugleich als Teil eines magnetoelastischen Transformatorgebers 15. Dieser Geber macht sich den Effekt zunutze, daß sich die magnetischen Eigenschaften bestimmter Materialien ändern, wenn sie einer mechanischen Spannung unterworfen werden. Wie aus Fig. 2 deutlicher erkennbar ist, kommt der Unterlenker 12 zwischen zwei gehäusefeste Augen 51, 52 zu liegen. Die axiale Lage des Spulenträgers 37 wird nun so gewählt, daß der Magnetkern 36 mit seinen Spulen 43, 44, 46 im wesentlichen in der Trennebene 53 zwischen dem einen Auge 51 und dem Unterlenker 12 zu liegen kommt. Der Magnetkern 39 liegt damit in einem Bereich, in dem im Bolzen 14 die größten Schubspannungen infolge der im Unterlenker 12 auftretenden Kräfte herrschen. An die Primärspule 46 wird nun eine konstante Spannung angelegt. An den beiden äußeren Sekundärspulen 43, 44 wird die Meßspannung abgegriffen. Dabei werden die Sekundärspulen 43, 44 so geschaltet, daß der Geber nach der Differenzmeßmethode arbeitet. Wie in Fig. 4 und 5 näher gezeigt ist, bilden sich zwischen den Schenkeln 41 und 45 magnetische Flußlinien 55 sowie zwischen den Schenkeln 42 und 45 magnetische Flußlinien 56 im Bolzen 14 aus, der aus weichmagnetischem Material besteht. Im Bereich dieser magnetischen Flußlinien 55, 56 wirken im Material des Bolzens 14 infolge der auftretenden Schubspannung zwischen den Schenkeln 41 und 45 eine Zugspannung 57 sowie zwischen den Schenkeln 42 und 45 eine Druckspannung 58. Ändert sich die Kraftrichtung, dann wechseln auch Zug- und Druckspannung und damit die Richtung des elektrischen Signals. Wegen der Magnetoelastizität des Materials wird im Bereich der Zugspannung 57 die Permeabilität des Bolzens 14 erhöht, während sie im Bereich der Druckspannung 58 abnimmt. Die Folge davon ist eine Kopplungsänderung zwischen der Primärspule 46 und den Sekundärspulen 43, 44, wodurch eine zu der jeweils auftretenden Zugkraft im Unterlenker 12 proportionale Meßspannung abgegriffen werden kann. Mit Hilfe der Führungsstange 49 und der Abdeckscheibe 47 läßt sich dabei erreichen, daß der Magnetkern 39 stets in einer solchen Lage gehalten wird, daß eine Winkelhalbierende 59 zwischen dem mittleren Schenkel 45 und einem äußeren Schenkel 41 im wesentlichen senkrecht zur Linie 54 verläuft, wie dies aus Fig. 3 näher ersichtlich ist. Auf diese Weise wird erreicht, daß die magnetischen Flußlinien 55, 56 in einem Bereich des Bolzens 14 verlaufen, in dem die Schubspannung am größten ist. Durch die Anordnung des Magnetkerns 39 mit seinen Spulen im Innern des Bolzens 14 wird zudem eine hohe Signalausbeute begünstigt, weil der Schubspannungsverlauf 61 in einer Rohrwand von außen nach innen hin ansteigt, wie dies in Fig. 5 dargestellt ist.

Die Fig. 6, 7, 8 und 9 zeigen einen zweiten Transformatorgeber 70 in entsprechender Weise wie der erste Transformatorgeber 15 nach den Fig. 2 bis 5. Gleiche Teile wie in den Fig. 2 bis 5 sind mit gleichen Bezugszeichen versehen. Der zweite Transformatorgeber 70 unterscheidet sich von demjenigen nach Fig. 2 vor allem durch seinen anderen Magnetkern 71. Letzterer besteht aus einem stabförmigen, ersten Kernteil 72, auf dem die Primärspule 46 sitzt und aus einem zweiten, U-förmigen Kernteil 73, das die beiden Sekundärspulen 43, 44 trägt. Das erste Kernteil 72 ist so lang wie der Innendurchmesser der Sacklochbohrung 36 und bildet zwei Pole 74, 75. Seine Längsachse verläuft senkrecht zu einer Ebene, in welcher das zweite Kernteil 73 liegt. Die Pole 74, 75 des ersten Kernteils 72 sowie beide Pole 76, 77 des zweiten Kernteils 73 liegen somit auf den Eckpunkten eines in der Wand der Sacklochbohrung 36 liegenden, gedachten Quadrates, wie dies vor allem Fig. 8 näher veranschaulicht. Die Längsachse des ersten Kernteils 72 liegt in Zugkraftrichtung des Unterlenkers, so daß sich die magnetischen Flußlinien 55, 56 im Bolzen 14 des Gebers 70 in einem Bereich maximaler Spannung ausbilden. Eine Blattfeder 78 hält die Pole 74 bis 77 des Magnetkerns 71 anliegend an der Wand der Sacklochbohrung 36. Die elektrischen Anschlüsse des Gebers 70 sind an der Stirnseite 34 als Steckkontakte 79 herausgeführt.

Die Wirkungsweise des zweiten Transformatorgebers 70 ist prinzipiell mit der des ersten Gebers 15 vergleichbar. Von Vorteil ist sein beträchtlich höheres Nutzsignal bei relativ geringem Bauaufwand vor allem durch die vierpolige Ausbildung des Magnetkerns 71.

Mit der vorgeschlagenen Ausbildung eines Lagerbolzens für den Unterlenker als magnetoelastischer Transformatorgeber wird eine äußerst einfach bauende und robust arbeitende Steuereinrichtung für eine Zugkraftregelung erreicht. Bei dieser Anordnung werden keine zusätzlichen Bauelemente wie teure Biege- oder Torsionsfedern oder Gestängeteile notwendig. Der Transformatorgeber ist zudem unempfindlich gegen Verschmutzung und eignet sich somit besonders gut für einen rauhen Betrieb in der Landwirtschaft. Zudem läßt sich der Geber leicht montieren und bei Defekten auch leicht austauschen. Ferner ist von Vorteil, daß durch die Geberausbildung und Anordnung die elektrischen Anschlüsse zu einem fest mit dem Traktorgehäuse verbundenen Bauelement führen. Besonders zweckmäßig ist ferner, daß durch die axiale Lage des Magnetkerns 39 relativ zur Trennebene 53 sowie durch seine Winkellage relativ zur Kraftrichtung im Unterlenker 12 sowie durch seine Anordnung im Hohlraum des Bolzens 14 ein Maximum an Signalausbeute erzielbar ist. Vorteilhaft ist ferner seine Bauweise mit drei Schenkeln und Spulen, wodurch er nach der Differenzmeßmethode arbeiten kann. Selbstverständlich kann auch eine Lagerung gewählt werden, bei der der Bolzen nur einseitig gehäusefest eingespannt ist.

Selbstverständlich sind Änderungen der gezeichneten Steuereinrichtung möglich, ohne vom Gedanken der Erfindung abzuweichen. So kann für jeden Unterlenker ein eigener Transformatorgeber vorgesehen werden, die gemeinsam auf die elektronische Steuereinrichtung 26 arbeiten. Die vorgeschlagene Steuereinrichtung kann auch bei anderen Bodenbearbeitungsmaschinen und Erntefahrzeugen eingesetzt werden, bei denen das Problem des elektrischen Messers mechanischer Spannungen auftritt. Obgleich die gezeigte Bauart des Transformatorgebers 15 besonders vorteilhaft ist, lassen sich auch Geber mit zwei oder mehr als drei Spulen verwirklichen, je nachdem wie groß die Signalausbeute sein muß. Auch kann bei der gezeigten Bauart der Magnetkern 39 in eine Trennebene zwischen Unterlenker 12 und Auge 52 gelegt werden. Ebenso kann die Winkellage des Magnetkerns gegenüber der in Fig. 3 gezeigten Lage um 180° geschwenkt werden. Selbstverständlich kann die aufgezeigte Zugkraftregelung auch mit anderen Regelungsarten wie Lageregelung, Druckregelung oder Mischregelung kombiniert werden. Für den Bolzen 14 können weichmagnetische Materialien verwendet werden, deren relative Permeabilität abhängig von den auftretenden, mechanischen Spannungen entweder steigt oder fällt.

Die Vorteile der Steuereinrichtung lassen sich auch weitgehend erreichen, wenn anstelle des besonders zweckmäßigen Transformatorgebers ein Geber mit einer einzigen Spule, einer sogenannten Drossel, verwendet wird. Ferner kann auch ein Geber verwendet werden, der auf einem U-förmigen Magnetkern eine Differenzdrossel aufnimmt.

**Patentansprüche**

1. Elektrohydraulische Steuereinrichtung zum Betätigen eines Hubwerks von landwirtschaftlichen Arbeitsfahrzeugen, insbesondere Traktoren, mit einer hydraulischen Einrichtung (16) aus wenigstens einer Druckmittelquelle (19) und einem Wegeventil (17) zur Steuerung eines hydraulischen Motors (23), mit dem wenigstens ein mittels eines Bolzens (14) gehäusefest am Fahrzeug angelenkter Unterlenker (12) heb- und senkbar ist und mit einem dem Bolzen (14) zugeordneten Meßwertgeber, der von den Kräften auf den Bolzen (14) abhängige, elektrische Signale an eine elektrische Verstärkereinrichtung (26) gibt, die mit der magnetischen Betätigung des Wegeventils (17) Verbindung hat, um abhängig von einer Kraftzunahme oder einer Abnahme im Unterlenker (12) letzteren zu heben bzw. zu senken, dadurch gekennzeichnet, daß der Bolzen (14) aus weichmagnetischem Material gebildet ist und als Teil eines magnetoelastischen Gebers (15) dient, wobei der Bolzen (14) einen Hohlraum (36) aufweist, in dem ein Magnetkern (39) mit wenigstens einer Spule (43, 44, 46) des Gebers (15) angeordnet ist.

2. Steuereinrichtung nach Anspruch 1, dadurch gekennzeichnet, daß der Magnetkern (39) im wesentlichen im Bereich einer Trennebene (53) zwischen der Lagerung des Unterlenkers (12) und einem gehäusefesten Bauteil (51) angeordnet ist.

3. Steuereinrichtung nach Anspruch 1 oder 2, dadurch gekennzeichnet, daß der Geber als Transformatorgeber (15, 70) ausgebildet ist.

4. Steuereinrichtung nach einem der Ansprüche 1 bis 3, dadurch gekennzeichnet, daß die eine Primärspule (46) und wenigstens eine Sekundärspule (43, 44) tragenden Schenkel (45 bzw. 41, 42) miteinander einen insbesondere rechten Winkel bilden, dessen Winkelhalbierende (59) mindestens nahezu senkrecht zur Zugkraftrichtung (54) des Unterlenkers (12) verläuft.

5. Steuereinrichtung nach einem der Ansprüche 1 bis 4, dadurch gekennzeichnet, daß der Magnetkern (39) zwei ein Arbeiten nach der Differenzmeßmethode erlaubende Schenkel (41, 42) mit Sekundärspulen (43, 44) aufweist.

6. Steuereinrichtung nach einem der Ansprüche 1 bis 5, dadurch gekennzeichnet, daß der Magnetkern (39) im Hohlraum (36) axial verstellbar angeordnet ist.

7. Steuereinrichtung nach Anspruch 6, dadurch gekennzeichnet, daß der Magnetkern (39) im Hohlraum (36) in seiner Winkellage verstellbar angeordnet ist.

8. Steuereinrichtung nach einem der Ansprüche 1 bis 7, dadurch gekennzeichnet, daß der Bolzen (14) eine den Hohlraum bildende Sacklochbohrung (36) aufweist, in die ein den Magnetkern (39) mit den Spulen (43, 44, 46) tragender Spulenträger (37) eingesetzt ist.

9. Steuereinrichtung nach Anspruch 8, dadurch gekennzeichnet, daß die elektrischen Anschlüsse des Gebers (15) an einer Stirnseite (34) des Bolzens (14) herausgeführt sind.

10. Steuereinrichtung nach Anspruch 5, dadurch gekennzeichnet, daß der Magnetkern (39) so ausgebildet ist, daß der mittlere Schenkel (45) die Primärspule (46) und die beiden äußeren Schenkel (41, 42) die Sekundärspulen (43, 44) tragen.

11. Steuereinrichtung nach einem der Ansprüche 1 bis 3 und 5 bis 10, dadurch gekennzeichnet, daß der Magnetkern (71) einen der Primärspule (46) zugeordneten, ersten Kernteil (72) aufweist, der zwei Pole (74, 75) bildet und dessen Längsachse mindestens nahezu in Richtung der Zugkraft (54') des Unterlenkers verläuft.

12. Steuereinrichtung nach Anspruch 11, dadurch gekennzeichnet, daß der Magnetkern (71) einen zweiten, U-förmigen Kernteil (73) aufweist, dessen Schenkel die Sekundärspulen (43, 44) tragen und der in einer senkrecht zur Längsachse des ersten Kernteils (72) verlaufenden Ebene liegt.

13. Steuereinrichtung nach Anspruch 11, dadurch gekennzeichnet, daß der erste Kernteil (72) stabförmig ausgebildet ist und seine Länge dem Durchmesser der Bohrung (36) im Bolzen (14) entspricht.

14. Steuereinrichtung nach Anspruch 12 oder 13, dadurch gekennzeichnet, daß die vier Pole (74, 75, 76, 77) des Magnetkerns (71) auf den Ecken eines Quadrats liegen.

15. Steuereinrichtung nach einem der Ansprüche 11 bis 14, dadurch gekennzeichnet, daß im Spulenträger (37) eine Feder (78) angeordnet ist, welche die Pole (74 bis 77) an der Wand der Bohrung (36) anliegend hält.

## Claims

1. Electro-hydraulic control apparatus for actuating a hoist on agricultural working vehicles, especially tractors, comprising an hydraulic device (16) consisting of at least one pressure medium source (19) and a multiway valve (17) for controlling an hydraulic motor (23), with which at least one control link pivotted to the vehicle by means of a pin (14) fixed to the housing, can be raised and lowered and comprising a transducer associated with the pin (14) which, in accordance with the forces on the pin (14), transmits electrical signals to an electrical amplifying device (26) which is associated with the magnetic actuation of the multiway valve (17) in order to raise or lower the control link (12) in accordance with an increase or decrease in force acting on the latter, characterised in that, the pin (14) is composed of soft magnetic material and forms part of a magnetoelastic generator (15) wherein the pin (14) has a cavity (36) in which is arranged a magnet core (39) with at least one coil (43, 44, 46) of the generator (15).

2. Control apparatus according to claim 1, characterised in that, the magnet core (39) is arranged substantially in the region of a plane of separation (53) between the mounting of the control link (12) and an element (51) fixed to the housing.

3. Control apparatus according to claim 1 or 2, characterised in that, the generator is formed as a transformer generator (15, 70).

4. Control apparatus according to one of claims 1 to 3, characterised in that the limbs (45 or 41, 42) carrying a primary coil (46) and at least one secondary coil (43, 44) form with one another, in particular, a right angle, the bisector (59) of which extends at least substantially perpendicular to he direction (54) of tensile force of the control link (12).

5. Control apparatus according to one of claims 1 to 4, characterised in that, the magnet core (39) has two limbs (41, 42) with secondary coils (43, 44) permitting an operation according to the difference measuring method.

6. Control apparatus according to one of claims 1 to 5, characterised in that, the magnet core (39) is arranged for axial displacement in the cavity (36).

7. Control apparatus according to claim 6, characterised in that, the magnet core (39) is arranged for adjustment of its angular position in the cavity (36).

8. Control apparatus according to one of claims 1 to 7, characterised in that, the pin (14) has a blind bore (36) forming the cavity, in which a coil holder (37) carrying the magnet core (39) with the coils (43, 44, 46).

9. Control apparatus according to claim 8, characterised in that, the electrical connectors for the generator (15) are brought out at one end (34) of the pin (14).

10. Control apparatus according to claim 5, characterised in that, the magnet core (39) is so designed that the central limb (45) carries the primary coil (46) and the two outer limbs (41, 42) carry the secondary coils (43, 44).

11. Control apparatus according to one of claims 1 to 3 and 5 to 10, characterised in that, the magnet core (71) has a first core portion (72) associated with the primary coil (46), which forms two poles (74, 75) and the longitudinal axis of which extends at least substantially in the direction of the tensile force (54) on the control link.

12. Control apparatus according to claim 11, characterised in that, the magnet core (71) has a second, U-shaped core portion (73) the limbs of which carry the secondary coils (43, 44) and which lies in a plane perpendicular to the longitudinal axis of the first core portion (72).

13. Control apparatus according to claim 11, characterised in that, the first core portion (72) is made rod-like and its length corresponds to the diameter of the bore (36) in the pin (14).

14. Control apparatus according to claim 12 or 13, characterised in that, the four poles (74, 75, 76, 77) of the magnet core lie at the corners of a square.

15. Control apparatus according to one of claims 11 to 14, characterised in that, a spring is arranged in the coil holder (37), which maintains the poles (74 to 77) in engagement wih the wall of the bore (36).

## Revendications

1. Dispositif de commande électrohydraulique pour manoeuvrer un mécanisme de levage d'un véhicule de travail agricole, en particulier d'un tracteur, comprenant un dispositif hydraulique (16) composé d'au moins une source de fluide de pression (19) et d'un distributeur (17) pour commander un moteur hydraulique (23), lequel permet de relever ou d'abaisseur au moins une barre de guidage (12) articulée par un axe (14) en un point fixe au châssis du véhicule, ainsi qu'un capteur conjugué à l'axe (14) et fournissant des signaux électriques fonction des forces sur l'axe (14) à un amplificateur électrique (26) qui est connecté à la commande électromagnétique du distributeur (17), en vue du levage ou de l'abaissement de la barre de guidage (12) à la suite d'une augmentation respectivement d'une diminution de la force transmise par elle, caractérisé en ce que l'axe (14) est en matériau magnétiquement doux et fait partie d'un capteur magnétoélastique (15), l'axe (14) possédant une cavité (36) dans laquelle est disposé un noyau magnétique (39) portant au moins une bobine (43, 44, 46) du capteur (15).

2. Dispositif de commande selon la revendication 1, caractérisé en ce que le noyau magnétique (39) est disposé sensiblement dans un plan (53) passant entre la partie articulée de la barre de guidage (12) et un élément (51) solidaire du châssis du véhicule sur lequel est articulée la barre.

3. Dispositif de commande selon la revendication 1 ou 2, caractérisé en ce que le capteur est un capteur à transformateur (15, 70).

4. Dispositif de commande selon la revendication 3, caractérisé en ce que le transformateur comporte un noyau magnétique (39) possédant une branche (45) portant une bobine primaire (46) et au moins une branche (41, 42) portant une bobine secondaire (43, 44), les deux branches formant entre elles un angle, en particulier un angle droit, dont la bissectrice (59) est au mins à peu près perpendiculaire à la direction (54) de l'effort de traction transmis par la barre (12).

5. Dispositif de commande selon la revendication 4, caractérisé en ce que le noyau magnétique (39) possède deux brances (41, 42) portant chacune une bobine secondaire (43, 44), permettant le fonctionnement selon la méthode de mesure différentielle.

6. Dispositif selon l'une quelconque des revendications 3 à 5, caractérisé en ce que le noyau magnétique (39) est disposé réglable axialement dans la cavité (36).

7 Dispositif de commande selon la revendication 6, caractérisé en ce que le noyau magnétique (39) est disposé réglable angulairement dans la cavité (36).

8. Dispositif de commande selon l'une quelconque ds revendications 1 à 7, caractérisé en ce que l'axe (14) possède un perçage borgne (36) formant ladite cavité et dans lequel est placé un portebobines (37) qui supporte le noyau magnétique (39) avec les bobines (43, 44, 46).

9. Dispositif de commande selon la revendication 8, caractérisé en ce que les connexions électriques du capteur (15) sont sorties par une extrémité (34) de l'axe (14).

10. Dispositif de commande selon la revendication 5, caractérisé en ce que le noyau magnétique (39) possède une branche médiane (45) portant la bobine primaire (46) et deux branches extérieures (41, 42) portant les bobines secondaires (43, 44).

11. Dispositif de commande selon l'une quelconque des revendications 5 à 10, caractérisé en ce que le noyau magétique (71) comporte une première partie (72) qui porte la bobine primaire (46) et forme deux pôles (74, 75) et dont l'axe longitudinal est orienté au moins à peu près suivant la direction (54') de l'effort de traction transmis par la barre de guidage.

12. Dispositif de commande selon la revendication 11, caractérisé en ce que le noyau magnétique (71) comporte une deuxième partie (73) en U, dont les branches portent les bobines secondaires (43, 44) et qui est située dans un plan perpendiculaire à l'axe longitudinal de la première partie d'un noyau (72).

13. Dispositif de commande selon la revendication 11, caractérisé en ce que la première partie de noyau (72) est en forme de barreau et sa longueur correspond au diamètre du perçage (36) de l'axe (14).

14. Dispositif de commande selon la revendication 12 ou 13, caractérisé en ce que les quatre pôles (74, 75, 76, 77) du noyau magnétique (71) sont situés sur les angles d'un carré.

15. Dispositif de commande selon l'une quelconque des revendications 11 à 14, caractérisé en ce que le porte-bcbines (37) contient un ressort (78) qui maintient les pôles (74 à 77) appliqués contre la paroi du perçage (36).

FIG. 1

FIG. 7

FIG. 6

FIG. 9

FIG. 8